# EUROPÄISCHE PATENTSCHRIFT

(11) **EP 3 083 341 B1**
(45) Veröffentlichungstag und Bekanntmachung des Hinweises auf die Patenterteilung: **13.05.2020**
(21) Anmeldenummer: 14824816.4
(22) Anmeldetag: 17.12.2014
(51) Int. Cl.: B60R 25/20, B60R 25/25, B60R 25/30, G07C 9/00

(54) **VERFAHREN ZUR AUTHENTIFIZIERUNG EINES FAHRERS IN EINEM KRAFTFAHRZEUG**
METHOD FOR AUTHENTICATING A DRIVER IN A MOTOR VEHICLE
PROCÉDÉ D'AUTHENTIFICATION D'UN CONDUCTEUR DANS UN VÉHICULE AUTOMOBILE

(30) Priorität: 18.12.2013 DE 102013114394
(43) Veröffentlichungstag der Anmeldung: 26.10.2016
(73) Patentinhaber: Huf Hülsbeck & Fürst GmbH & Co. KG, 42551 Velbert (DE)
(72) Erfinder: GENNERMANN, Sven, 42551 Velbert (DE)
(74) Vertreter: Vogel, Andreas
(86) Internationale Anmeldenummer: PCT/EP2014/078277
(87) Internationale Veröffentlichungsnummer: WO 2015/091679

(56) Entgegenhaltungen:
- EP-A2- 1 634 782
- WO-A1-2014/012762
- DE-A1-102004 057 746
- DE-A1-102006 042 358
- DE-T2-602006 000 078
- GB-A- 2 373 614
- US-A1- 2012 313 796
- US-A1- 2013 099 940

## Beschreibung

Die Erfindung betrifft ein Verfahren zur Authentifizierung eines Fahrers in einem Kraftfahrzeug. Zudem bezieht sich die Erfindung auf ein System, das mit dem zuvor genannten Verfahren betreibbar ist.

Aus dem Stand der Technik ist es bekannt, Schutzmechanismen gegen Autodiebstahl zu verbessern bzw. Vorrichtungen zu entwickeln, die es lediglich erlauben, dass eine berechtigte Person ein Kraftfahrzeug fahren, insbesondere starten kann. Es existieren viele Arten von Sicherheitsvorrichtungen, die einem Fahrer das Starten eines Kraftfahrzeuges nur nach Authentifizierung der biologischen Informationen des Fahrers gestatten. Die DE 60 2006 000 078 T2 bedient sich einer biometrischen Authentifizierung, wobei die Überprüfung der erfassten biometrischen Daten des Fahrers über eine Kraftfahrzeugsteuerung erfolgt. Ein wesentlicher Nachteil dieses Standes der Technik ist, dass jedes Kraftfahrzeug mit einer derartigen Überprüfungseinheit ausgestattet werden muss. Ebenfalls ergibt sich die Gefahr, dass am Kraftfahrzeug während der Überprüfung der biometrischen Daten Manipulationen denkbar sind.

Aus der US 2012/0313796 A1 ist ein Fahrzeugkontrollsystem bekannt, bei welchem ein Authentifizierungsserver ein Benutzergerät authentifiziert.

Die Aufgabe der vorliegenden Erfindung ist es, die soeben genannten Nachteile zu vermeiden, insbesondere ein effizientes Verfahren zur Authentifizierung eines Fahrers in einem Kraftfahrzeug zu schaffen, wobei gleichzeitig eine zuverlässige Funktionsweise gewährleistet ist.

Die genannte Aufgabe wird durch ein Verfahren mit sämtlichen Merkmalen des Patentanspruches 1 gelöst. Vorteilhafte Ausgestaltungen der Erfindung sind in den abhängigen Ansprüchen angegeben. Zudem wird die Erfindung durch ein System mit sämtlichen Merkmalen des Anspruches 11 gelöst. Vorteilhafte Ausführungsformen sind in den abhängigen Ansprüchen angegeben.

Erfindungsgemäß wird ein Verfahren zur Authentifizierung eines Fahrers in einem Kraftfahrzeug vorgeschlagen, mit einer im Kraftfahrzeug angeordneten Erkennungsvorrichtung zur Erfassung von Istdaten des Fahrers, die während der Authentifizierung zu einer Überprüfungsvorrichtung, die in einer externen Station außerhalb des Kraftfahrzeuges angeordnet ist, gesendet werden, wobei die Überprüfungsvorrichtung die Istdaten mit Solldaten vergleicht und bei einer Übereinstimmung der Istdaten mit den Solldaten ein Freigabesignal von der externen Station zum Kraftfahrzeug gesendet wird, wodurch ein Startvorgang des Kraftfahrzeuges für den Fahrer ermöglicht wird.

Ein wesentlicher Kern der Erfindung ist es, dass innerhalb des Kraftfahrzeuges Istdaten des Fahrers über die Erkennungsvorrichtung erfasst werden. Das bedeutet, dass die Ermittlung der Istdaten des Fahrers erst dann erfolgt, wenn der Fahrer sich im Kraftfahrzeug befindet, insbesondere auf dem Fahrersitz des Kraftfahrzeuges sitzt. Nach einer Erfassung dieser Istdaten erfolgt ein weiterer Schritt des erfindungsgemäßen Verfahrens und zwar dass diese erfassten Istdaten zu einer externen Station übermittelt werden, wobei diese externe Station außerhalb des Kraftfahrzeuges sich befindet. Die zur Erkennungsvorrichtung des Kraftfahrzeuges beabstandete externe Station weist eine Überprüfungsvorrichtung auf, die die Istdaten mit zuvor gespeicherten Solldaten des Fahrers vergleicht. Stimmen die Istdaten mit den Solldaten überein, wird ein Freigabesignal von der externen Station zum Kraftfahrzeug gesendet, das dieses Freigabesignal empfängt, wodurch ein Startvorgang des Kraftfahrzeuges für den Fahrer ermöglicht wird. Ebenfalls ist es denkbar, dass im Kraftfahrzeug eine zweite Überprüfungsvorrichtung angeordnet ist, in der Solldaten gespeichert sind. Diese Solldaten werden von der externen Station zum Kraftfahrzeug gesendet. Falls beispielsweise eine Kommunikation zwischen der externen Station und dem Kraftfahrzeug nicht möglich ist, erfolgt eine Überprüfung der Istdaten mit den Solldaten in der zweiten Überprüfungsvorrichtung. Stimmen die Istdaten mit den Solldaten in der zweiten Überprüfungsvorrichtung überein, wird ein Freigabesignal für das Kraftfahrzeug generiert, das dieses Freigabesignal empfängt, wodurch ein Startvorgang des Kraftfahrzeuges für den Fahrer ermöglicht wird.

Ohne Freigabesignal kann der Fahrer innerhalb des Kraftfahrzeuges einen Startvorgang nicht starten, da dieser blockiert oder deaktiviert ist. Erst bei einer positiven Authentifizierung, d. h. bei einer Übereinstimmung der Istdaten mit den Solldaten ist der Startvorgang freigegeben. Vorteilhafterweise sind die Istdaten biometrische Istdaten des Fahrers.

Es ist gemäß der Erfindung denkbar, dass im Falle einer Kommunikationsstörung zwischen der externen Station und dem Kraftfahrzeug die zweite Überprüfungsvorrichtung die Istdaten von der externen Station empfängt und die Isatdaten mit den Solldaten vergleicht und bei einer Übereinstimmung der Istdaten mit den Solldaten ein Freigabesignal generiert wird, wodurch ein Startvorgang des Kraftfahrzeugs für den Fahrer ermöglicht wird.

Zudem ist erfindungsgemäß vorgesehen, dass die Solldaten der Überprüfungsvorrichtung der externen Station in regelmäßigen Zeitabständen der zweiten Überprüfungsvorrichtung übermittelt werden, insbesondere während der Authentifizierung die Solldaten der Überprüfungsvorrichtung der externen Station der kraftfahrzeugseitigen Überprüfungsvorrichtung übermittelt werden. Es erfolgt somit ein regelmäßiger Abgleich der Solldaten zwischen der Überprüfungsvorrichtung der externen Station und der kraftfahrzeugseitigen Überprüfungsvorrichtung.

Vorteilhafterweise können die Solldaten vor der Authentifizierung in die externe Station eingelesen werden, insbesondere ist eine Einlesevorrichtung vorgesehen, die außerhalb des Kraftfahrzeuges Solldaten des Fahrers erfasst, die z. B. in der externen Station gespeichert werden. Die Einlesevorrichtung kann z. B. eine Kamera sein, die Bilddaten der berechtigten Person, die das Kraftfahrzeug starten möchte, erfasst. Die Einlesevorrichtung kann in einer weiteren Ausführungsform derart ausgeführt sein, dass visuell und/oder optisch definierte biometrische Charakteristika des Fahrers erfasst und als Solldaten gespeichert werden.

Ebenfalls ist es denkbar, dass eine Einlesevorrichtung außerhalb des Kraftfahrzeuges vorgesehen ist, die Solldaten des Fahrers erfasst. Diese Einlesevorrichtung steht mit der externen Station in Kommunikation, wobei die externe Station die Überprüfungsvorrichtung aufweist, die dafür zuständig ist, die eingelesenen Solldaten mit den Istdaten zu vergleichen.

Die Erfindung umfasst des Weiteren die Möglichkeit, dass neben den biometrischen Solldaten in der externen Station weitere Informationen hinterlegbar sind, die einen möglichen Startvorgang des Kraftfahrzeuges begrenzen bzw. limitieren können. Das bedeutet, dass einer Person ein definiertes Zeitfenster, z. B. ein definierter Tag, Monat oder Stunden, etc. bereitgestellt wird, um einen positiven Startvorgang des Kraftfahrzeuges auszulösen.

Ferner ist es denkbar, dass so lange keine Übereinstimmung der Daten vorliegt, das Kraftfahrzeug sich in einem Sicherungsmodus befindet, in dem ein Starten des Kraftfahrzeuges gesperrt ist, wobei bei einer Übereinstimmung der Daten das Kraftfahrzeug sich in einem Startmodus befindet. Zum Beispiel kann die Zündungssteuerung des Kraftfahrzeuges im Sicherungsmodus deaktiviert sein, um einer nicht authentifizierten Person das Starten des Kraftfahrzeuges nicht zu gestatten. Erst bei einer Übereinstimmung der Daten erfolgt ein Moduswechsel des Kraftfahrzeuges, und zwar vom Sicherungsmodus in den Startmodus. Über eine entsprechende Aktion des Fahrers, beispielsweise durch ein Einführen und/oder Drehen des Zündschlüssels innerhalb des im Kraftfahrzeug vorgesehenen Kraftfahrzeugschlosses, erfolgt die Zündung des Kraftfahrzeugmotors. Ebenfalls ist es denkbar, dass ein Start-/Stoppschalter zur Aktivierung der Zündung des Kraftfahrzeugmotors vorgesehen ist.

In einer weiteren die Erfindung verbessernden Maßnahme kann vorgesehen sein, dass in der externen Station, insbesondere in der Überprüfungsvorrichtung ablesbar ist, inwieweit das Kraftfahrzeug sich in einem Sicherungsmodus oder in einem Startmodus befindet.

Ebenfalls kann das erfindungsgemäße Verfahren in einem Start-/Stopp-System eines Kraftfahrzeuges integriert sein, das ein automatisch arbeitendes System zur Reduzierung des Kraftstoffverbrauches in Standphasen, z. B. bei einem Ampelstopp, von Kraftfahrzeugen ist. Das Start-/Stopp-System arbeitet mit einer automatischen Motorabschaltung. Das erfindungsgemäße Verfahren kann z. B. derart in einem Start-/Stopp-System integriert sein, das im Falle einer automatischen Motorabschaltung und einem anschließenden automatischen Motorstart eine Authentifizierung des Fahrers gemäß des Erfindungsgedankens ausbleibt, wenn zuvor eine positive Authentifizierung stattgefunden hat.

Erfindungsgemäß kann das Verfahren eine Steuerung umfassen, die ausgehend von zumindest einer definierten Aktion des Fahrers die Authentifizierung startet. Das bedeutet, dass der Fahrer eine Handlung bewusst oder unbewusst vornehmen muss, damit die Authentifizierung gestartet wird. Diese definierte Aktion kann z. B. eine Betätigung der Kupplung, des Blinkers, eine Berührung des Lenkrades, insbesondere an einer definierten Stelle, das Einnehmen der Sitzposition auf dem Fahrersitz, eine bewusste Aktivierung eines Schalters, einer Fläche, eines Knopfes, die Betätigung der Hupe, etc. sein. Zweckmäßigerweise startet die Authentifizierung bei einer bewussten Aktivierung eines innerhalb des Kraftfahrzeuges angeordneten Zündschalters und/oder Start-/Stopp-Schalters.

Des Weiteren kann es sinnvoll sein, dass die Erkennungsvorrichtung bei der Authentifizierung biologische Informationen des Fahrers als Istdaten erfasst, wobei die Istdaten zumindest eine der folgenden biologischen Informationen umfassen: Körpergröße, Iris, Retina, Gesichtsgeometrie, Fingerabdruck, Handlinienstruktur, Handvenenstruktur, Handgeometrie, Nagelbettmuster, Ohrform, Stimme, Unterschrift, Bewegungsmusterverhalten für zumindest eine definierte Bewegung des Fahrers, Lippenbewegung, Körpergeruch, DNA-Überprüfung. Über die biometrische Überprüfung lässt sich eine hohe Sicherheit und eine hohe Zuverlässigkeit bei der Authentifizierung des Fahrers erzielen. Eine Kombination von zumindest zwei biometrischen Charakteristika für einen zuverlässigen Authentifizierungsprozess ist ebenfalls denkbar, z. B. die Kombination einer Gesichtserkennung mit einem Fingerabdruck. Die Gesichtserkennung kann z. B. über eine Kamera erfolgen. Die Fingerabdruckerkennung kann z. B. über Halbleiterfingerprintsensoren durchgeführt werden. Beispielsweise sind Streifensensoren denkbar, über diese der jeweilige Finger zu bewegen ist.

Das erfindungsgemäße Verfahren schließt ebenfalls mit ein, dass die Erkennungsvorrichtung so lange deaktiviert bleibt, bis die externe Station ein entsprechendes Wecksignal zum Kraftfahrzeug sendet. Das bedeutet, dass aus der externen Station bestimmt werden kann, welches Kraftfahrzeug zu welchem Zeitpunkt überhaupt gestartet werden kann.

Vorteilhafterweise kann erst eine Authentifizierung starten, wenn eine zweite definierte Aktion des Fahrers vorliegt, insbesondere die zweite definierte Aktion durch einen kraftfahrzeugseitigen Sensor erkannt wird. Die zweite definierte Aktion kann z. B. eine Betätigung der Kupplung, des Blinkers, eine Berührung des Lenkrades, insbesondere an einer definierten Stelle, das Einnehmen der Sitzposition auf dem Fahrersitz, eine bewusste Aktivierung eines Schalters, einer Fläche, eines Knopfes, die Betätigung der Hupe, etc. sein. Über die Verwendung der zweiten definierten Aktion des Fahrers kann eine erhöhte Sicherheit und Zuverlässigkeit des Verfahrens geschaffen werden. Beispielsweise ist es denkbar, dass der Sensor ein Sitzsensor oder einen Türsensor oder ein Pedalsensor oder ein Ganghebelsensor oder ein Sensor zur Erkennung eines mobilen Identifikationsgebers, den der Benutzer bei sich trägt, ausgebildet ist. Ebenfalls kann vorgesehen sein, dass der Sensor ein Sicherheitsgurtsensor ist. Das bedeutet, dass erst, wenn der Fahrer auf dem Fahrersitz sitzt oder die Fahrertür geschlossen ist oder ein entsprechendes Pedal betätigt ist oder der Ganghebel eine definierte Stellung hat bzw. in eine definierte Stellung gebracht worden ist oder der Sicherheitsgurt vorschriftsmäßig angelegt worden ist, der Authentifizierungsvorgang über die erste definierte Aktion des Fahrers, insbesondere über die Betätigung des Zündschalters und/oder des Start-/Stopp-Schalters gestartet werden kann. Ebenfalls kann vorgesehen sein, dass zunächst eine Identifizierungsüberprüfung zwischen dem mobilen Identifikationsgeber, den der Kraftfahrzeughalter bzw. Fahrer bei sich trägt, und dem Kraftfahrzeug erfolgt, wobei bei einer positiven Identifikationsüberprüfung die bereits genannte erste definierte Aktion des Fahrers einen Startvorgang der Authentifizierung auslösen kann.

Vorteilhafterweise kann die Erkennungsvorrichtung eine Kamera zur Erfassung der Istdaten aufweisen. Zum Beispiel kann die Kamera eine CCD-Kamera sein, die auch Körperbewegungen oder-haltungen des Fahrers aufnehmen und erfassen kann.

Des Weiteren wird die Aufgabe durch ein System zur Authentifizierung eines Fahrers in einem Kraftfahrzeug gelöst, mit einer im Kraftfahrzeug angeordneten Erkennungsvorrichtung zur Erfassung von Istdaten des Fahrers, die während der Authentifizierung zu einer Überprüfungsvorrichtung, die in einer externen Station außerhalb des Kraftfahrzeuges angeordnet ist, gesendet werden, wobei die Überprüfungsvorrichtung die Istdaten mit Solldaten vergleicht und bei einer Übereinstimmung der Istdaten mit den Solldaten ein Freigabesignal von der externen Station zum Kraftfahrzeug gesendet wird, wodurch ein Startvorgang des Kraftfahrzeuges für den Fahrer ermöglicht wird. Die Erkennungsvorrichtung kann als elektronische Box innerhalb des Kraftfahrzeuges angeordnet sein. Zudem ist das Kraftfahrzeug bzgl. dieser Box nachrüstbar. Besonders vorteilhaft kann dieses System für Mietwagenagenturen, Flottenfahrzeuge von Firmen oder sogar für Versicherungen sein, für die die Information wichtig ist, wer und/oder wie oft das Kraftfahrzeug von einer jeweiligen Person betrieben wird bzw. gefahren wird. Insbesondere bei der Versicherungsprämie für ein jeweiliges Fahrzeug könnte erfindungsgemäß vorgesehen sein, dass das System individuell der externen Station mitteilt, wie oft welcher Fahrer das jeweilige Fahrzeug gefahren hat.

Ebenfalls ist erfindungsgemäß vorgesehen, dass im Kraftfahrzeug eine zweite Überprüfungsvorrichtung angeordnet ist, in der vorzugsweise Solldaten gespeichert sind. Diese Solldaten werden von der externen Station zum Kraftfahrzeug gesendet. Falls beispielsweise eine Kommunikation zwischen der externen Station und dem Kraftfahrzeug nicht möglich ist, erfolgt eine Überprüfung der Istdaten mit den Solldaten in der zweiten Überprüfungsvorrichtung. Stimmen die Istdaten mit den Solldaten in der zweiten Überprüfungsvorrichtung überein, wird ein Freigabesignal für das Kraftfahrzeug generiert, das dieses Freigabesignal empfängt, wodurch ein Startvorgang des Kraftfahrzeuges für den Fahrer ermöglicht wird. Ohne Freigabesignal kann der Fahrer innerhalb des Kraftfahrzeuges einen Startvorgang nicht starten, da dieser blockiert oder deaktiviert ist. Erst bei einer positiven Authentifizierung, d. h. bei einer Übereinstimmung der Istdaten mit den Solldaten ist der Startvorgang freigegeben. Vorteilhafterweise sind die Istdaten biometrische Istdaten des Fahrers.

Es ist gemäß der Erfindung denkbar, dass im Falle einer Kommunikationsstörung zwischen der externen Station und dem Kraftfahrzeug die zweite Überprüfungsvorrichtung die Istdaten von der externen Station empfängt und die Istdaten mit den Solldaten vergleicht und bei einer Übereinstimmung der Istdaten mit den Solldaten ein Freigabesignal generiert wird, wodurch ein Startvorgang des Kraftfahrzeugs für den Fahrer ermöglicht wird.

Zudem ist erfindungsgemäß vorgesehen, dass die Solldaten der Überprüfungsvorrichtung der externen Station in regelmäßigen Zeitabständen der zweiten Überprüfungsvorrichtung übermittelt werden, insbesondere während der Authentifizierung die Solldaten der Überprüfungsvorrichtung der externen Station der zweiten Überprüfungsvorrichtung übermittelt werden. Es erfolgt somit ein regelmäßiger Abgleich der Solldaten zwischen der Überprüfungsvorrichtung der externen Station und der kraftfahrzeugseitigen Überprüfungsvorrichtung.

Vorteilhafte Ausgestaltungen des Systems sind in den abhängigen Ansprüchen angegeben.

Vorteilhaft kann das Kraftfahrzeug Kommunikationsmittel aufweisen, um Istdaten sowie ein Freigabesignal zu versenden und/oder zu empfangen, wobei die externe Station ein Kommunikationsmittel aufweist, um Istdaten sowie ein Freigabesignal zu empfangen und/oder zu versenden. Das Kommunikationsmittel des Kraftfahrzeuges sowie das Kommunikationsmittel der externen Station kann als eine Sende- und/oder Empfangseinrichtung ausgebildet sein. Die Kommunikation zwischen den Kommunikationsmitteln kann vorteilhafterweise verschlüsselt erfolgen. Das Kommunikationsmittel des Kraftfahrzeuges kann in der Erkennungsvorrichtung integriert sein. Das Kommunikationsmittel kann fest im Kraftfahrzeug angeordnet sein. Ebenfalls ist es im Rahmen der Erfindung denkbar, dass das kraftfahrzeugseitige Kommunikationsmittel mobil ist, beispielsweise, dass das Kommunikationsmittel ein Mobiltelefon ist, das der Benutzer bei sich trägt. Zudem umfasst die Erfindung, dass bei einer Kommunikationsstörung zwischen dem fest installierten Kommunikationsmittel des Kraftfahrzeuges und der externen Station das Mobiltelefon als "Ersatz" gestartet werden kann, um die Kommunikation zwischen der externen Station und dem Kraftfahrzeug aufzubauen.

Vorteilhafterweise sind die Istdaten biometrische Istdaten des potentiellen Fahrers.

Des Weiteren besteht eine Möglichkeit darin, die Steuerung in der Erkennungsvorrichtung zu integrieren, wobei die Steuerung mit einer Motorsteuerung in Signalverbindung bringbar ist. Die Steuerung entscheidet unter Anderem, wann die Authentifizierung startet. Hierbei ist es denkbar, dass ausgehend von zumindest einer ersten definierten Aktion des Fahrers die Authentifizierung startet. Ebenfalls ist es denkbar, dass zumindest zwei definierte Aktionen des Fahrers notwendig sind, damit die Authentifizierung startet. Dieses erkennt die Steuerung, die in einem weiteren Ausführungsbeispiel auch außerhalb der Erkennungsvorrichtung angeordnet sein kann, insbesondere in der Motorsteuerung des Kraftfahrzeuges integriert ist.

Erfindungsgemäß ergibt sich die weitere Möglichkeit, dass die externe Station mit einer Datenbank und/oder einem Speicher in Verbindung steht, in der/in dem die Solldaten abgelegt bzw. gespeichert sind. Hierfür kann es vorteilhaft sein, dass die externe Station eine Einlesevorrichtung zum Einlesen der biometrischen Solldaten aufweist. Wie bei der Erkennungsvorrichtung zum Einlesen der biometrischen Istdaten sind die entsprechenden Gerätschaften, Apparaturen, wie beispielsweise Kamera, etc. denkbar, damit die Einlesevorrichtung der externen Station zuverlässig die biometrischen Solldaten erfassen kann. In einer möglichen Ausführungsform der Erfindung ist es denkbar, dass zunächst der Fahrer sich in die externe Station begibt, in der seine Solldaten, insbesondere biometrischen Soldaten, über die Einlesevorrichtung erfasst werden. Diese Solldaten werden dann in der Datenbank gespeichert. Die Überprüfungsvorrichtung der externen Station greift während der Authentifizierung auf diese Datenbank zu, um die empfangenen Istdaten des Fahrers mit den Solldaten zu vergleichen bzw. auf Übereinstimmung zu prüfen. Handelt es sich beispielsweise bei der externen Station um eine Autovermietungsagentur kann der Fahrer, nachdem die Solldaten in der externen Station erfasst worden sind, anschließend zum Kraftfahrzeug gehen. Wenn der Fahrer nun das Auto entriegelt hat, die Tür geöffnet hat und anschließend sich auf den Fahrersitz gesetzt hat, kann die Authentifizierung nach dem beschriebenen erfindungsgemäßen Verfahren starten. Das bedeutet, dass die ermittelten Istdaten zunächst durch die im Kraftfahrzeug angeordnete Erkennungsvorrichtung erfasst werden, anschließend zur externen Station gesendet werden, die eine entsprechende Überprüfung durchführt, inwieweit die Istdaten mit den Solldaten entsprechen. Bei einer Übereinstimmung der Daten erhält das Kraftfahrzeug von der externen Station ein entsprechendes Freigabesignal, sodass das Kraftfahrzeug vom Fahrer gestartet werden kann.

Vorteilhafterweise ist die externe Station das Internet. Somit ist es denkbar, dass die Überprüfungsvorrichtung dezentral angeordnet werden kann, um sämtliche Kraftfahrzeuge zu sichern bzw. mit sämtlichen Fahrern von unterschiedlichen Kraftfahrzeugen einen Authentifizierungsvorgang durchzuführen. Hierbei kann es vorteilhaft sein, dass es eine Vielzahl an Einlesevorrichtungen gibt, die Solldaten erfassen können, die wiederum über entsprechende Kommunikationsmittel, beispielsweise über Funk und/oder mittels des Internets zur externen Station, insbesondere zur Überprüfungsvorrichtung übermittelt werden. Die zentrale Überprüfungsvorrichtung kann einen Vergleich der vom Kraftfahrzeug erhaltenden Istdaten mit den jeweiligen Solldaten durchführen.

Um eine verbesserte Sicherheit zu schaffen, kann die Erkennungsvorrichtung derart innerhalb des Kraftfahrzeuges angeordnet sein, dass lediglich eine Erfassung von Istdaten vom Fahrersitz des Kraftfahrzeuges möglich ist. Somit wird vermieden, dass ein Einlesen der Istdaten von einer anderen Position innerhalb des Kraftfahrzeuges erfolgt. Ein Zweck dieser Ausführungsform ist, dass wirkungsvoll verhindert werden kann, dass ein nicht berechtigter Fahrer das Kraftfahrzeug starten kann, wobei gleichzeitig der eigentlich berechtigte Fahrer sich im Kraftfahrzeug befindet und die "richtigen" Istdaten über die Erkennungsvorrichtung einlesen lässt. Beispielsweise ist es denkbar, dass in der Nähe des Kraftfahrzeuglenkrades und/oder an der Armatur in der Nähe des Kraftfahrzeuglenkrades oder an einer definierten Position des Fahrersitzes, die für den Beifahrer nicht ohne weiteres zugänglich ist, die Erkennungsvorrichtung angeordnet ist. Zudem ist es im Rahmen der Erfindung denkbar, dass das Mobiltelefon, das der Benutzer bei sich trägt, als Erkennungsvorrichtung für die Istdaten dient.

In einer möglichen Ausführungsform der Erfindung kann die Erkennungsvorrichtung fest im Kraftfahrzeug angeordnet sein, wobei die Erkennungsvorrichtung eine Funktion einer Kommunikationsvorrichtung mit übernehmen kann, beispielsweise, dass z. B. gleichzeitig mit der Erkennungsvorrichtung "telefoniert" werden kann. Die Erkennungsvorrichtung kann ein Kommunikationsmodul mit einem Mobilfunkmodul zum Aufbau einer Kommunikationsverbindung über ein Mobilfunknetz umfassen. Ferner kann diese Kommunikationsverbindung auch für die oben genannte Authentifizierung eingesetzt werden, dass bedeutet, dass über die Kommunikationsverbindung die Authentifizierungsabfrage zwischen der externen Station und dem Kraftfahrzeug durchführbar ist.

Ebenfalls ist es denkbar, dass sich die Erkennungsvorrichtung mobil im Kraftfahrzeug befindet. Hierbei kann es vorgesehen sein, dass die Erkennungsvorrichtung eine Telefonvorrichtung, insbesondere ein Mobiltelefon ist, welches mit einem eigenen Kommunikationsmittel mit der Überprüfungsvorrichtung kommunizieren kann.

In einer weiteren Ausführung der Erfindung können sich die Istdaten über eine Kreditkarte, EC-Karte, einen Reisepass, Personalausweis oder über einen Führerschein des Fahrers zusammensetzen. Insbesondere ist es denkbar, dass die Erkennungsvorrichtung definierte Bereiche des Personalausweises einliest und diese Istdaten anschließend der Überprüfungsvorrichtung übermittelt.

Weitere Vorteile, Merkmale und Einzelheiten der Erfindung ergeben sich aus der nachfolgenden Beschreibung, in der unter Bezugnahme auf die Zeichnungen mehrere mögliche Ausführungsbeispiele der Erfindung im Einzelnen beschrieben sind. Es zeigen:
- Fig. 1: eine rein schematische Ansicht eines erfindungsgemäßen Systems zur Authentifizierung eines Fahrers in einem Kraftfahrzeug mit einer externen Station, die in Signalverbindung mit einer Erkennungsvorrichtung des Kraftfahrzeuges steht,
- Fig. 2: ein weiteres Ausführungsbeispiel einer Erkennungsvorrichtung gemäß Figur 1,
- Fig. 3: ein weiteres Ausführungsbeispiel einer Überprüfungsvorrichtung, die in einer externen Station gemäß Figur 1 einsetzbar ist,
- Fig. 4: ein weiteres Ausführungsbeispiel einer Überprüfungsvorrichtung,
- Fig. 5: ein noch weiteres Ausführungsbeispiel eines Systems zur Authentifizierung eines Fahrers in einem Kraftfahrzeug,
- Fig. 6: ein weiteres Ausführungsbeispiel des erfindungsgemäßen Systems,
- Fig. 7: eine weitere Alternative des genannten Systems zur Authentifizierung eines Fahrers in einem Kraftfahrzeug,
- Fig. 8: ein weiteres Ausführungsbeispiel des erfindungsgemäßen Systems und
- Fig. 9: ein noch weiteres Ausführungsbeispiel eines System zur Authentifizierung eines Fahrers in einem Kraftfahrzeug.

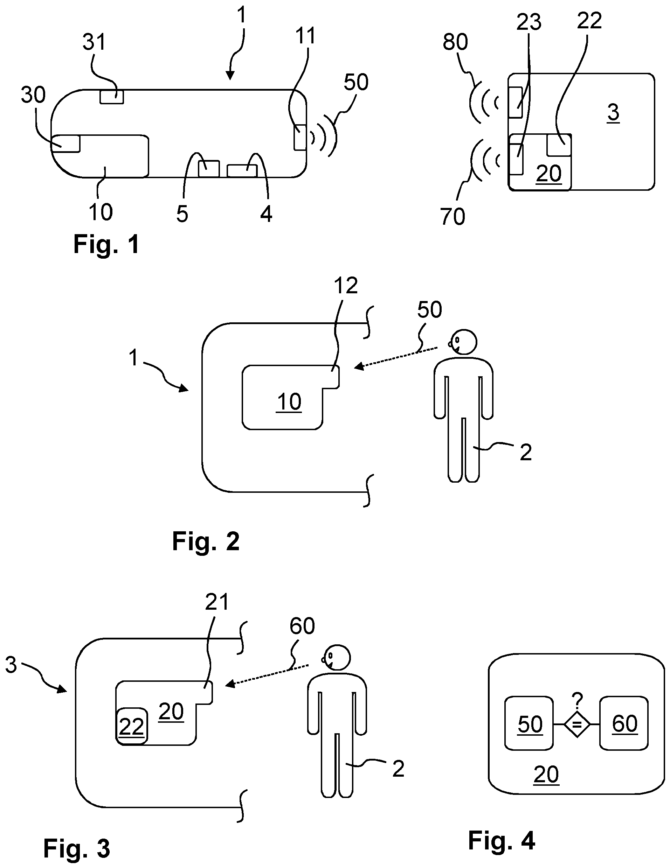

In Figur 1 ist schematisch ein Kraftfahrzeug 1 gezeigt, in dem ein nicht explizit dargestellter Fahrer sich befinden kann. Nachdem der Fahrer innerhalb des Kraftfahrzeuges 1 sich befindet, kann über eine Erkennungsvorrichtung 10 eine Erfassung von Istdaten 50 des Fahrers erfolgen. Wenn die Istdaten 50 erfasst worden sind, erfolgt über ein innerhalb des Kraftfahrzeuges 1 angeordnetes Kommunikationsmittel 11 eine Übertragung dieser Istdaten 50 zu einer beabstandeten externen Station 3. In dieser externen Station 3 werden diese Istdaten 50 durch ein Kommunikationsmittel 23 erfasst. Zudem weist die externe Station 3 eine Überprüfungsvorrichtung 20 auf, die die empfangenen Istdaten 50 durch das Kommunikationsmittel 23 mit Solldaten 60 vergleichen kann, welches schematisch in Figur 4 gezeigt ist.

Die Solldaten 60 wurden zuvor, d. h. vor der Authentifizierung über eine Einlesevorrichtung 21 eingelesen, wobei die Einlesevorrichtung 21 Daten vom Fahrer 2 ermittelt hat. In den vorliegenden Ausführungsbeispielen stellen die Solldaten 60 und Istdaten 50 des Fahrers 2 biometrische Istdaten 50 sowie biometrische Solldaten 60 dar.

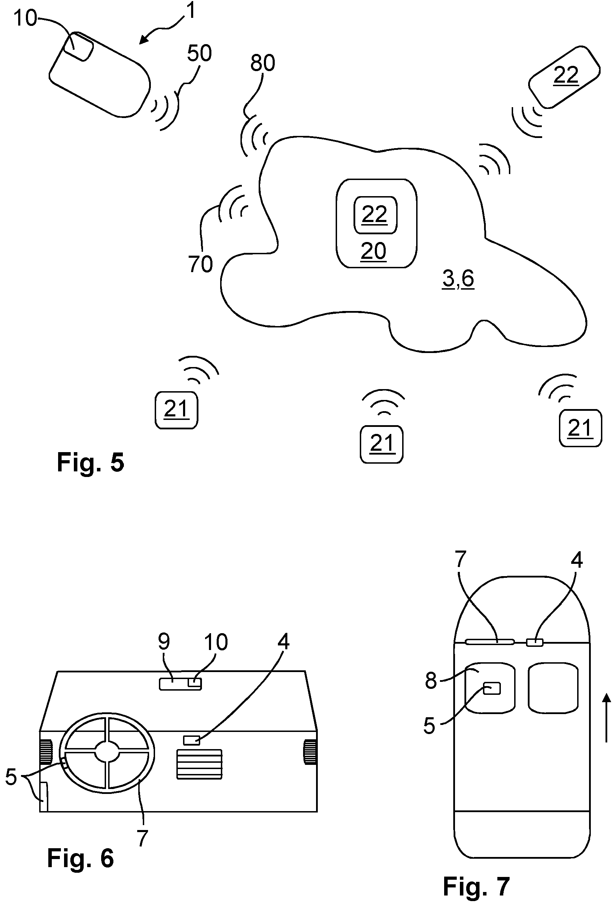

Beispielsweise ist es denkbar, dass der Fahrer 2 innerhalb der externen Station 3 sich aufgehalten hat, in der die Einlesevorrichtung 21 die entsprechenden biometrischen Solldaten 30 erfasst hat. Ebenfalls ist es denkbar, dass die Einlesevorrichtung 21 getrennt von der externen Station 3 angeordnet ist, wie es in Figur 5 gezeigt ist. Nachdem die biometrischen Solldaten 60 durch die Einlesevorrichtung 21 erfasst worden sind, ist es denkbar, dass diese biometrischen Solldaten 60 zu der der Einlesevorrichtung 21 entfernten externen Station 3 gesendet werden. Innerhalb der externen Station 3 befindet sich die Überprüfungsvorrichtung 20, die eine entsprechende Überprüfung bzw. einen Vergleich der Istdaten 50 mit den Solldaten 60 vornimmt. Liegt eine Übereinstimmung der Daten vor, sendet gemäß Figur 1 und Figur 5, 8, 9 die externe Station 3 ein Freigabesignal 70 zum Kraftfahrzeug 1. Das Freigabesignal 70, welches durch ein Kommunikationsmittel 11 des Kraftfahrzeuges 1 empfangen werden kann, ermöglicht, dass über eine definierte Aktion des Fahrers der Startvorgang des Kraftfahrzeuges 1 ausgelöst werden kann. Die definierte Aktion des Fahrers kann z. B. sein, dass der Fahrer innerhalb des Kraftfahrzeuges 1 den Zündschalter betätigt und/oder einen Start-/Stopp-Schalter 4 betätigt. Vorteilhafterweise triggert diese bewusste Aktivierung des Fahrers den Start dieses soeben beschriebenen Authentifizierungsvorganges sowie bei einer positiven Authentifizierung den Startvorgang des Kraftfahrzeuges 1.

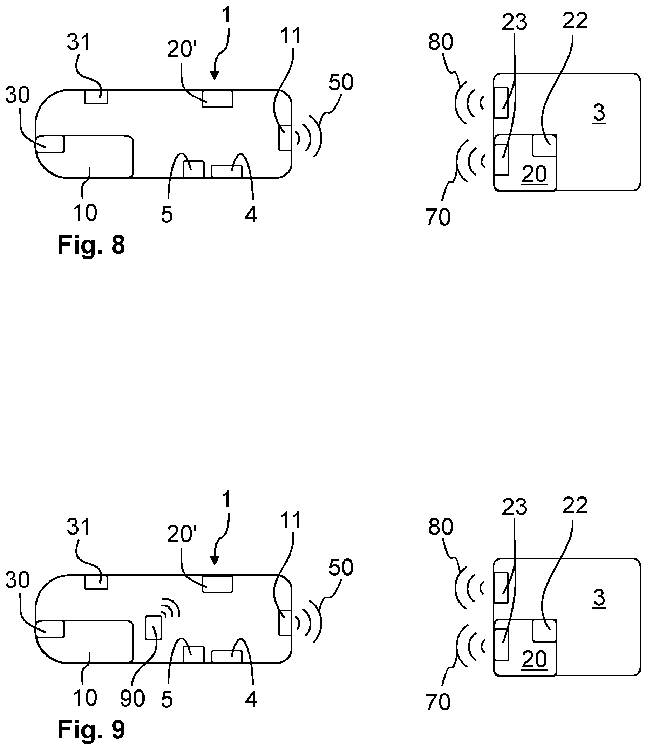

Gemäß Figur 8 weist das Kraftfahrzeug 1 eine zweite Überprüfungsvorrichtung 20' auf. Im Falle einer Kommunikationsstörung zwischen der externen Station 3 und dem Kraftfahrzeug 1 empfängt die zweite Überprüfungsvorrichtung 20' die Istdaten 50 von der externen Station 3, wobei in der zweiten Überprüfungsvorrichtung 20' die Istdaten 50 mit den Solldaten 60 verglichen werden und bei einer Übereinstimmung der Istdaten 50 mit den Solldaten 60 ein Freigabesignal 70 generiert wird, wodurch ein Startvorgang des Kraftfahrzeuges 1 für den Fahrer 2 möglich wird.

Es ist vorgesehen, dass die Solldaten 60 der Überprüfungsvorrichtung 20 der externen Station 3 in regelmäßigen Zeitabständen der kraftfahrzeugseitigen Überprüfungsvorrichtung 20' übermittelt werden. Hierbei erfolgt vorzugsweise während der Authentifizierung eine Übermittlung der Solldaten 60 der Überprüfungsvorrichtung 20 der externen Station 3 zur zweiten Überprüfungsvorrichtung 20'.

Gemäß Figur 1, Figur 3 und Figur 5, 8, 9 kann ein Speicher 22 bzw. eine Datenbank vorgesehen sein, die die biometrischen Solldaten 60 speichern kann. Dieser Speicher/Datenbank 22 kann z. B. in der Überprüfungsvorrichtung 20, 20' integriert sein. Ebenfalls ist es denkbar, dass die Überprüfungsvorrichtung 20, 20' mit einer externen Datenbank bzw. mit einem externen Speicher 22 zu kommunizieren hat, um die Solldaten 60 für die Überprüfung mit den Istdaten 50 zu erhalten. Diese Alternative ist ebenfalls in Figur 5 gezeigt.

Die Versendung der Istdaten 50, der Solldaten 60 sowie des Freigabesignals 70 kann verschlüsselt erfolgen. Die Erkennungsvorrichtung 10 sowie die Einlesevorrichtung 21 können beispielsweise ein optisches oder ein akustisches Erkennungselement aufweisen, um biometrische Charakteristika des Fahrers 2 zu erfassen bzw. zu erkennen. Beispielsweise ist es denkbar, dass eine Kamera 12 vorgesehen ist, um definierte biometrische Größen oder Informationen des Fahrers 2 zu ermitteln, welches schematisch in Figur 2 gezeigt ist.

Auch in Figur 2 kann in der Erkennungsvorrichtung 10 ein nicht explizit dargestellter Speicher vorgesehen sein, der kurzzeitig die Istdaten 50 speichert, die anschließend zur externen Station 3 übermittelt werden.

Solange keine Übereinstimmung der zu vergleichenden Daten 50, 60 vorliegt, befindet sich das Kraftfahrzeug 1 gemäß Figur 1 und Figur 5, 8, 9 in einem Sicherungsmodus, bei dem das Starten des Kraftfahrzeuges 1 gesperrt ist. Das bedeutet, dass z. B. die Zündungssteuerung des Kraftfahrzeuges 1 deaktiviert ist. Erst bei einer Übereinstimmung der zu vergleichenden Daten 50, 60 erfolgt ein Wechsel des Kraftfahrzeuges 1 in einen Startmodus, sodass der Kraftfahrzeugmotor gestartet werden kann.

In Figur 1 ist gezeigt, dass eine Steuerung 30 in der Erkennungsvorrichtung 10 vorgesehen sein kann, die ausgehend von einer definierten Aktion des Fahrers 2 die oben bereits beschriebene Authentifizierung starten kann. Nach Erhalt des Freigabesignals 70 kann die Steuerung 30 z. B. der Motorsteuerung 31 des Kraftfahrzeuges 1 ein entsprechendes Signal senden, dass das Kraftfahrzeug 1 aus dem Sicherungsmodus in den Startmodus gewechselt werden kann. Ebenfalls ist es denkbar, dass die Motorsteuerung 31 komplett die Funktion der Steuerung 30 übernimmt, sodass auf die Steuerung 30 der Erkennungsvorrichtung 10 verzichtet werden kann.

Gemäß Figur 1, 8, 9 ist gezeigt, dass über die Betätigung des Zündschalters 4 der Vorgang der Authentifizierung gestartet werden kann. Gemäß Figur 6 und Figur 7 kann vorgesehen sein, dass zum Starten der Authentifizierung eine zweite definierte Aktion des Fahrers 2 vorliegen muss, um eine Authentifizierung der oben genannten Art zu starten. Gemäß Figur 1 und 6, 8, 9 ist es beispielsweise denkbar, dass der Fahrer 2 neben der Aktivierung des Zündschalters 4, der alternativ auch ein Start-/Stopp-Schalter sein kann, das Lenkrad 7 berühren muss. Innerhalb des Lenkrades 7 ist ein Sensor 5 vorgesehen, der diese zweite definierte zweite Aktion des Fahrers 2 erkennt. Erst wenn beide Aktionen des Fahrers ausgeführt werden, startet der Authentifizierungsvorgang. Die Erkennungsvorrichtung 10 kann z. B. im Rückspiegel 9 integriert sein, die die Istdaten 50 des Fahrers 2 erfasst. Damit Manipulationen möglichst ausgeschlossen sind, kann der Sensor 5 seitlich des Lenkrades 7 angeordnet sein, damit der Beifahrer diesen Sensor 5 nicht betätigen kann.

Figur 7 zeigt eine weitere Variante, bei der der Sensor 5 im Fahrersitz 8 integriert ist. Erst wenn der Zündschalter 4 sowie der Sensor 5 den Fahrer detektieren, startet der Authentifizierungsvorgang. Die Istdaten 50 gemäß Figur 7 können beispielsweise wie in Figur 6 über die Erkennungsvorrichtung 10 ermittelt werden, die im Rückspiegel 9 integriert ist. Selbstverständlich sind alternative Technologien, wie bereits oben beschrieben, ebenfalls denkbar, um biometrische Istdaten 50 des Fahrers 2 zu erfassen.

Gemäß Figur 1 und Figur 5, 8, 9 ist es denkbar, dass die Erkennungsvorrichtung 10 innerhalb des Kraftfahrzeuges 1 so lange deaktiviert bleibt, bis ein entsprechendes Wecksignal 80 von der externen Station 3 in Richtung Kraftfahrzeug 1 gesendet wird. Dieses vom Kraftfahrzeug 1 empfangene Wecksignal 80 bewirkt, dass die Erkennungsvorrichtung 10 aus ihrem deaktivierten Zustand in einen aktiven Zustand gebracht wird, damit die Erkennungsvorrichtung 10 über eine bzw. über mehrere definierte Aktionen des Fahrers 2 angesprochen werden kann, um biometrische Istdaten 50 des Fahrers 2 zu erfassen.

Gemäß Figur 5 ist es zudem möglich, dass die externe Station 3 innerhalb des Internets 6 integriert ist, sodass die Daten 50, 60, 70, 80 innerhalb des Internets 6 oder zumindest teilweise innerhalb des Internets 6 sowie über Funk übertragen werden können. Die Datenbank bzw. der Speicher 22 kann sich auf einem Server, gekoppelt mit dem Internet 6, befinden.

Das Kommunikationsmittel 23 der externen Station 3 kann sich auch in der Überprüfungsvorrichtung 20, 20' oder in der Einlesevorrichtung 21 befinden. Hierbei ist es denkbar, dass die Einlesevorrichtung 21 in der Überprüfungsvorrichtung 20, 20' integriert ist, welches beispielsweise in Figur 3 gezeigt ist. In Figur 5 sind allerdings die Einlesevorrichtungen 21 separiert von der Überprüfungsvorrichtung 20, 20'.

Vorteilhafterweise erfolgt die Authentifizierung einmalig vor jedem gewöhnlichen Startvorgang des Kraftfahrzeuges 1. Ebenfalls kann es vorgesehen sein, dass gemäß sämtlicher Figuren in regelmäßigen Abständen bzw. unregelmäßigen Abständen während der Fahrt automatisch eine Authentifizierung gemäß den beschriebenen Ausführungen durchgeführt wird. Falls überraschender Weise eine positive Authentifizierung nicht durch die Überprüfungsvorrichtung der externen Station 3 bestätigt wird, kann ein Signal beispielsweise ausgelöst werden, das weitere Personen hierüber informiert. Ebenfalls ist es denkbar, dass ein entsprechendes Signal von der externen Station 3 zum Kraftfahrzeug 1, insbesondere zur Steuerung 30 bzw. zur Motorsteuerung 31 gesendet wird. Beispielsweise ist es denkbar, dass hierdurch die Steuerung 30, 31 den Fahrer 2 über ein akustisches oder visuelles Signal informiert, dass keine positive Authentifizierung vorliegt. Ebenfalls kann die Erfindung mit umfassen, dass der Fahrer 2 über die Motorsteuerung 31 gezwungen wird, das Kraftfahrzeug 1 zu stoppen bzw. die Steuerung 30 bzw. die Motorsteuerung 31 eine Abschaltung des Kraftfahrzeugmotors veranlasst. Bei der letztgenannten Ausführungsvariante kann es Sinn machen, dass vor einer Abschaltung des Kraftfahrzeugmotors, der Fahrer 2 hierüber informiert wird, und zwar, dass eine Abschaltung in Kürze durch die Motorsteuerung 31 bzw. durch die Steuerung 30 erfolgen wird, sodass dem Fahrer 2 noch genügend Zeit verbleibt die Fahrzeuggeschwindigkeit zu reduzieren und selbstständig das Kraftfahrzeug 1 zu parken und den Motor abzuschalten.

In einer möglichen Ausführungsform der Erfindung kann die Erkennungsvorrichtung 10 fest im Kraftfahrzeug 1 angeordnet sein. Alternativ ist es ebenfalls denkbar, dass sich die Erkennungsvorrichtung 10 mobil im Kraftfahrzeug 1 befindet. Hierbei kann es vorgesehen sein, dass die Erkennungsvorrichtung 10 ein Mobiltelefon 90 ist, welches mit einem eigenen Kommunikationsmittel mit der Überprüfungsvorrichtung 20, 20' kommunizieren kann (s. Fig. 9).

In einer weiteren Ausführung der Erfindung können sich die Istdaten 50 über eine Kreditkarte, EC-Karte, einen Reisepass, Personalausweis oder über einen Führerschein des Fahrers zusammensetzen. Insbesondere ist es denkbar, dass die Erkennungsvorrichtung 10 definierte Bereiche des Personalausweises einliest und diese Istdaten 50 anschließend der Überprüfungsvorrichtung 20 übermittelt.

Beispielsweise kann gemäß Figur 1 bzw. Figur 2 und Figur 9 die Erkennungsvorrichtung 10 als ein Mobiltelefon 10, 90 ausgebildet sein, welches beweglich und mobil im Kraftfahrzeug 1 angeordnet ist. Über eine am Mobiltelefon 10, 90 angeordnete Kamera 12 können z. B biometrische Daten vom Benutzer 2 erfasst werden. Das Mobiltelefon 10, 90 kann ein eigenes Kommunikationsmittel aufweisen, das dem Kommunikationsmittel 11 aus Figur 1 entspricht, um Istdaten 50 zur externen Station 3 zu übermitteln. Sämtliche Ausführungen zu den Figuren 1 bis 7 sind auch auf ein Mobiltelefon 10, 90 als Erkennungsvorrichtung anwendbar.

### Bezugszeichenliste

- 1: Kraftfahrzeug
- 2: Fahrer
- 3: externe Station
- 4: Zündschalter
- 5: Sensor
- 6: Internet
- 7: Lenkrad
- 8: Sitz
- 9: Rückspiegel

- 10: Erkennungsvorrichtung, Mobiltelefon
- 11: Kommunikationsmittel
- 12: Kamera

- 20: Überprüfungsvorrichtung
- 21: Einlesevorrichtung
- 22: Speicher/Datenbank
- 23: Kommunikationsmittel

- 30: Steuerung
- 31: Motorsteuerung

- 50: Istdaten

- 60: Solldaten

- 70: Freigabesignal

- 80: Wecksignal
- 90: Mobiltelefon

## Patentansprüche

1. Verfahren zur Authentifizierung eines Fahrers (2) in einem Kraftfahrzeug (1), mit einer im Kraftfahrzeug (1) angeordneten Erkennungsvorrichtung (10) zur Erfassung von Istdaten (50) des Fahrers (2) innerhalb des Kraftfahrzeuges (1), die während der Authentifizierung zu einer Überprüfungsvorrichtung (20), die in einer externen Station (3) außerhalb des Kraftfahrzeuges (1) angeordnet ist, gesendet werden, wobei
die Überprüfungsvorrichtung (20) die Istdaten (50) mit Solldaten (60) vergleicht und bei einer Übereinstimmung der Istdaten (50) mit den Solldaten (60) ein Freigabesignal (70) von der externen Station (3) zum Kraftfahrzeug (1) gesendet wird, wodurch ein Startvorgang des Kraftfahrzeuges (1) für den Fahrer (2) ermöglicht wird, wobei
eine zweite Überprüfungsvorrichtung (20') innerhalb des Kraftfahrzeuges (1) vorgesehen ist, die die Solldaten (60) der externen Station (3) empfängt, wobei
die Solldaten (60) der Überprüfungsvorrichtung (20) der externen Station (3) in regelmäßigen Zeitabständen der zweiten Überprüfungsvorrichtung (20') übermittelt werden, wobei
die zweite Überprüfungsvorrichtung (20') separat zur Erkennungsvorrichtung (10) vorgesehen ist.

2. Verfahren nach Anspruch 1,
**dadurch gekennzeichnet,**
**dass** die Solldaten (60) vor der Authentifizierung in die externe Station (3) eingelesen werden, insbesondere eine Einlesevorrichtung (21) vorgesehen ist, die außerhalb des Kraftfahrzeuges (1) Solldaten (60) des Fahrers (2) erfasst, die in der externen Station (3) gespeichert werden.

3. Verfahren nach Anspruch 1 oder 2,
**dadurch gekennzeichnet,**
**dass** so lange keine Übereinstimmung der Daten vorliegt, das Kraftfahrzeug (1) sich in einem Sicherungsmodus befindet, in dem ein Starten des Kraftfahrzeuges (1) gesperrt ist, wobei bei einer Übereinstimmung der Daten das Kraftfahrzeug (1) sich in einem Startmodus befindet.

4. Verfahren nach einem der vorhergehenden Ansprüche,
**dadurch gekennzeichnet,**
**dass** eine Steuerung (30) vorgesehen ist, die ausgehend von zumindest einer definierten Aktion des Fahrers (2) die Authentifizierung startet Insbesondere dass bei einer bewussten Aktivierung eines innerhalb des Kraftfahrzeuges (1) angeordneten Zündschalters (4) die Authentifizierung startet.

5. Verfahren nach einem der vorhergehenden Ansprüche,
**dadurch gekennzeichnet,**
**dass** die Erkennungsvorrichtung (10), die insbesondere eine Kamera (12) zur Erfassung der Istdaten (50) aufweist, bei der Authentifizierung biologische Informationen des Fahrers (2) als Istdaten (50) erfasst, wobei die Istdaten (50) zumindest eine Charakteristika der folgenden biologischen Informationen umfassen: Körpergröße, Iris, Retina, Gesichtsgeometrie, Fingerabdruck, Handlinienstruktur, Handvenenstruktur, Handgeometrie, Nagelbettmuster, Ohrform, Stimme, Unterschrift, Bewegungsmusterverhalten für zumindest eine definierte Bewegung des Fahrers, Lippenbewegung.

6. Verfahren nach einem der vorhergehenden Ansprüche,
**dadurch gekennzeichnet,**
**dass** erst eine Authentifizierung startet, wenn eine zweite definierte Aktion des Fahrers (2) vorliegt, insbesondere die zweite definierte Aktion durch einen kraftfahrzeugseitigen Sensor (5) erkannt wird.

7. Verfahren nach Anspruch 6,
**dadurch gekennzeichnet,**
**dass** der Sensor (5) ein Sitzsensor oder einen Türsensor oder ein Pedalsensor oder ein Ganghebelsensor oder ein Sensor zur Erkennung eines mobilen Identifikationsgebers, den der Benutzer bei sich trägt, ist.

8. Verfahren nach einem der vorhergehenden Ansprüche,
**dadurch gekennzeichnet,**
**dass** im Falle einer Kommunikationsstörung zwischen der externen Station (3) und dem Kraftfahrzeug (1) die zweite Überprüfungsvorrichtung (20') die Istdaten (50) von der externen Station (3) empfängt und die Istdaten (50) mit den Solldaten (60) vergleicht und bei einer Übereinstimmung der Istdaten (50) mit den Solldaten (60) ein Freigabesignal (70) generiert wird, wodurch ein Startvorgang des Kraftfahrzeugs (1) für den Fahrer (2) ermöglicht wird.

9. Verfahren nach einem der vorhergehenden Ansprüche,
**dadurch gekennzeichnet,**
**dass** während der Authentifizierung die Solldaten (60) der Überprüfungsvorrichtung (20) der externen Station (3) der zweiten Überprüfungsvorrichtung (20') übermittelt werden.

10. Verfahren nach einem der vorhergehenden Ansprüche,
**dadurch gekennzeichnet,**
**dass** die Istdaten (50) biometrische Istdaten sind.

11. System, insbesondere dass das System nach einem Verfahren gemäß einem der Ansprüche 1 bis 10 betreibbar ist, zur Authentifizierung eines Fahrers (2) in einem Kraftfahrzeug (1), mit
einer im Kraftfahrzeug (1) angeordneten Erkennungsvorrichtung (10) zur Erfassung von Istdaten (50) des Fahrers (2) innerhalb des Kraftfahrzeuges (1), die während der Authentifizierung zu einer Überprüfungsvorrichtung (20), die in einer externen Station (3) außerhalb des Kraftfahrzeuges (1) angeordnet ist, gesendet werden, wobei
die Überprüfungsvorrichtung (20) die Istdaten (50) mit Solldaten (60) vergleicht und bei einer Übereinstimmung der Istdaten (50) mit den Solldaten (60) ein Freigabesignal (70) von der externen Station (3) zum Kraftfahrzeug (1) gesendet wird, wodurch ein Startvorgang des Kraftfahrzeuges (1) für den Fahrer (2) ermöglicht wird, wobei
eine zweite Überprüfungsvorrichtung (20') innerhalb des Kraftfahrzeuges (1) vorgesehen ist, die die Solldaten (60) der externen Station (3) empfängt, wobei
die Solldaten (60) der Überprüfungsvorrichtung (20) der externen Station (3) in regelmäßigen Zeitabständen der zweiten Überprüfungsvorrichtung (20') übermittelt werden, wobei
die zweite Überprüfungsvorrichtung (20') separat zur Erkennungsvorrichtung (10) vorgesehen ist.

12. System nach Anspruch 11,
**dadurch gekennzeichnet,**
**dass** das Kraftfahrzeug (1) Kommunikationsmittel (11) aufweist, um Istdaten (50) sowie ein Freigabesignal (70) zu versenden und/oder zu empfangen, wobei die externe Station, die insbesondere das Internet (14) ist, (3) ein Kommunikationsmittel (23) aufweist, um Istdaten (50) sowie ein Freigabesignal (70) zu empfangen und/oder zu versenden.

13. System nach Anspruch 11 bis 12,
**dadurch gekennzeichnet,**
**dass** die Steuerung (30) in der Erkennungsvorrichtung (10) integriert ist, wobei die Steuerung (30) mit einer Motorsteuerung (31) in Signalverbindung bringbar ist.

14. System nach Anspruch 11 bis 13,
**dadurch gekennzeichnet,**
**dass** die Erkennungsvorrichtung (10) derart innerhalb des Kraftfahrzeuges (1) angeordnet ist, dass lediglich eine Erfassung von Istdaten (50) vom Fahrersitz des Kraftfahrzeuges (1) möglich ist, oder dass die Erkennungsvorrichtung (10) ein Kommunikationsmodul zum Aufbau einer Kommunikationsverbindung über ein Mobilfunknetz umfasst, insbesondere dass die Erkennungsvorrichtung (10) mobil ist, insbesondere aus dem Kraftfahrzeug (1) herausnehmbar ist.

15. System nach einem der vorhergehenden Ansprüche,
**dadurch gekennzeichnet,**
**dass** im Falle einer Kommunikationsstörung zwischen der externen Station (3) und dem Kraftfahrzeug (1) die zweite Überprüfungsvorrichtung (20') die Istdaten (50) von der externen Station (3) empfängt und die Istdaten (50) mit den Solldaten (60) vergleicht und bei einer Übereinstimmung der Istdaten (50) mit den Solldaten (60) ein Freigabesignal (70) generiert wird, wodurch ein Startvorgang des Kraftfahrzeugs (1) für den Fahrer (2) ermöglicht wird.

## Claims

1. Method for authenticating a driver (2) in a motor vehicle (1), with
a recognition device (10) arranged in the motor vehicle (1) for detecting actual data (50) of the driver (2) inside the motor vehicle (1), which are transmitted during authentication to a checking device (20) arranged in an external station (3) outside the motor vehicle (1), wherein
the checking device (20) compares the actual data (50) with nominal data (60) and, if the actual data (50) matches the nominal data (60), an enable signal (70) is sent from the external station (3) to the motor vehicle (1), thereby enabling the driver (2) to start the motor vehicle (1), wherein
a second checking device (20') is provided inside the motor vehicle (1), which receives the nominal data (60) from the external station (3), wherein
the nominal data (60) of the checking device (20) of the external station (3) are transmitted at regular intervals to the second checking device (20'), wherein
the second checking device (20') is provided separately from the recognition device (10).

2. Method according to claim 1,
**characterized in that,**
the nominal data (60) is read into the external station (3) before authentication, in particular a read-in device (21) is provided which detects nominal data (60) of the driver (2) outside the motor vehicle (1), which nominal data is stored in the external station (3).

3. Method according to claim 1 or 2,
**characterized in that,**
as long as there is no match of the data, the motor vehicle (1) is in a save mode in which starting of the motor vehicle (1) is blocked, wherein if there is a match of the data, the motor vehicle (1) is in a start mode.

4. Method according to one of the preceding claims,
**characterized in that,**
a controller (30) is provided which starts the authentication process on the basis of at least one defined action by the driver (2), in particular **in that** the authentication process starts when an ignition switch (4) arranged within the motor vehicle (1) is deliberately activated.

5. Method according to one of the preceding claims,
**characterized in that,**
the recognition device (10), which has in particular a camera (12) for recording the actual data (50), records biological information of the driver (2) as actual data (50) during authentication, the actual data (50) comprising at least one characteristic of the following biological information:
body size, iris, retina, facial geometry, fingerprint, palm line structure, hand vein structure, hand geometry, nail bed pattern, ear shape, voice, signature, movement pattern behaviour for at least one defined movement of the driver, lip movement.

6. Method according to one of the preceding claims,
**characterized in that,**
authentication only starts when a second defined action of the driver (2) is present, in particular the second defined action is detected by a sensor (5) on the vehicle.

7. Method according to claim 6,
**characterized in that,**
the sensor (5) is a seat sensor or a door sensor or a pedal sensor or a gear lever sensor or a sensor for detecting a mobile identification device that the user carries with him/her.

8. Method according to one of the preceding claims,
**characterized in that,**
in the event of a communication disturbance between the external station (3) and the motor vehicle (1), the second checking device (20') receives the actual data (50) from the external station (3) and compares the actual data (50) with the nominal data (60), and if the actual data (50) matches the nominal data (60), an enable signal (70) is generated, thereby enabling the motor vehicle (1) to be started by the driver (2).

9. Method according to one of the preceding claims,
**characterized in that,**
during authentication, the nominal data (60) of the checking device (20) of the external station (3) is transmitted to the second checking device (20').

10. Method according to one of the preceding claims,
**characterized in that,**
the actual data (50) are biometric actual data.

11. System, in particular that the system can be operated according to a method according to one of claims 1 to 10, for authenticating a driver (2) in a motor vehicle (1), having
a recognition device (10) arranged in the motor vehicle (1) for detecting actual data (50) of the driver (2) inside the motor vehicle (1), which are transmitted during authentication to a checking device (20) arranged in an external station (3) outside the motor vehicle (1), wherein
the checking device (20) compares the actual data (50) with nominal data (60) and, if the actual data (50) matches the nominal data (60), an enable signal (70) is sent from the external station (3) to the motor vehicle (1), thereby enabling the driver (2) to start the motor vehicle (1), wherein
a second checking device (20') is provided inside the motor vehicle (1), which receives the nominal data (60) from the external station (3), wherein
the nominal data (60) of the checking device (20) of the external station (3) are transmitted at regular intervals to the second checking device (20'), wherein
the second checking device (20') is provided separately from the recognition device (10).

12. System according to claim 11,
**characterized in that,**
the motor vehicle (1) has communication means (11) for transmitting and/or receiving actual data (50) and an enable signal (70), the external station (3), which is in particular the Internet (14), having a communication means (23) for receiving and/or transmitting actual data (50) and an enable signal (70).

13. System according to claim 11 to 12,
**characterized in that,**
the controller (30) is integrated in the recognition device (10), the controller (30) being able to be brought into signal connection with a motor controller (31).

14. System according to claim 11 to 13,
**characterized in that,**
the recognition device (10) is arranged within the motor vehicle (1) in such a way that it is only possible to record actual data (50) from the driver's seat of the motor vehicle (1), or **in that** the recognition device (10) comprises a communication module for setting up a communication connection via a mobile radio network, in particular **in that** the recognition device (10) is mobile, in particular can be removed from the motor vehicle (1).

15. System according to one of the preceding claims,
**characterized in that,**
in the event of a communication disturbance between the external station (3) and the motor vehicle (1), the second checking device (20') receives the actual data (50) from the external station (3) and compares the actual data (50) with the nominal data (60), and if the actual data (50) matches the nominal data (60), an enable signal (70) is generated, thereby enabling the motor vehicle (1) to be started by the driver (2).

## Revendications

1. Procédé d'authentification d'un conducteur (2) dans un véhicule automobile (1), avec
un dispositif de reconnaissance (10) disposé dans le véhicule automobile (1) pour détecter des données réelles (50) du conducteur (2) à l'intérieur du véhicule automobile (1), qui sont transmises lors de l'authentification à un dispositif de contrôle (20) disposé dans une station externe (3) à l'extérieur du véhicule automobile (1), dans lequel
le dispositif de contrôle (20) compare les données réelles (50) avec les données nominales (60) et, si les données réelles (50) correspondent aux données nominales (60), un signal de validation (70) est envoyé de la station externe (3) au véhicule automobile (1), permettant ainsi au conducteur (2) de démarrer le véhicule automobile (1), dans lequel
un deuxième dispositif de contrôle (20') est prévu à l'intérieur du véhicule automobile (1), qui reçoit les données nominales (60) de la station externe (3), dans lequel les données nominales (60) du dispositif de contrôle (20) de la station externe (3) sont transmises à intervalles réguliers au deuxième dispositif de contrôle (20'), dans lequel
le deuxième dispositif de contrôle (20') est fourni séparément du dispositif de reconnaissance (10).

2. Procédé selon la revendication 1,
**caractérisé en ce que**
les données nominales (60) sont lues dans la station externe (3) avant l'authentification, en particulier un dispositif de lecture (21) est prévu qui détecte les données nominales (60) du conducteur (2) à l'extérieur du véhicule automobile (1), lesquelles données nominales sont stockées dans la station externe (3).

3. Procédé selon la revendication 1 ou 2,
**caractérisé en ce que**
tant qu'il n'y a pas de concordance des données, le véhicule automobile (1) est dans un mode de sauvegarde dans lequel le démarrage du véhicule automobile (1) est bloqué, dans lequel s'il y a concordance des données, le véhicule automobile (1) est dans un mode de démarrage.

4. Procédé selon l'une des revendications précédentes,
**caractérisé en ce**
**qu'**il est prévu un contrôleur (30) qui lance le processus d'authentification sur la base d'au moins une action définie du conducteur (2), en particulier **en ce que** le processus d'authentification démarre lorsqu'un contacteur d'allumage (4) disposé à l'intérieur du véhicule automobile (1) est délibérément activé.

5. Procédé selon l'une des revendications précédentes,
**caractérisé en ce que**
le dispositif de reconnaissance (10), qui comporte notamment une caméra (12) pour l'enregistrement des données réelles (50), enregistre des informations biologiques du conducteur (2) en tant que données réelles (50) lors de l'authentification, les données réelles (50) comprenant au moins une caractéristique des informations biologiques suivantes :
taille du corps, iris, rétine, géométrie du visage, empreinte digitale, structure de la ligne de la paume, structure des veines de la main, géométrie de la main, modèle du lit des ongles, forme de l'oreille, voix, signature, comportement du modèle de mouvement pour au moins un mouvement défini du conducteur, mouvement des lèvres.

6. Procédé selon l'une des revendications précédentes,
**caractérisé en ce que**
l'authentification ne commence que lorsqu'une deuxième action définie du conducteur (2) est présente, en particulier la deuxième action définie est détectée par un capteur (5) sur le véhicule.

7. Procédé selon la revendication 6,
**caractérisé en ce que**
le capteur (5) est un capteur de siège ou un capteur de porte ou un capteur de pédale ou un capteur de levier de vitesse ou un capteur pour détecter un dispositif d'identification mobile que l'utilisateur porte sur lui.

8. Procédé selon l'une des revendications précédentes,
**caractérisé en ce que**
en cas de perturbation de la communication entre la station externe (3) et le véhicule automobile (1), le deuxième dispositif de contrôle (20') reçoit les données réelles (50) de la station externe (3) et compare les données réelles (50) aux données nominales (60) et, si les données réelles (50) correspondent aux données nominales (60), un signal de validation (70) est généré, permettant ainsi au conducteur (2) de démarrer le véhicule automobile (1).

9. Procédé selon l'une des revendications précédentes,
**caractérisé en ce que**
lors de l'authentification, les données nominales (60) du dispositif de contrôle (20) de la station externe (3) sont transmises au deuxième dispositif de contrôle (20').

10. Procédé selon l'une des revendications précédentes,
**caractérisé en ce que**
les données réelles (50) sont des données biométriques réelles.

11. Système, en particulier que le système peut être exploité selon une procédé selon l'une des revendications 1 à 10, pour authentifier un conducteur (2) dans un véhicule automobile (1), ayant
un dispositif de reconnaissance (10) disposé dans le véhicule automobile (1) pour détecter des données réelles (50) du conducteur (2) à l'intérieur du véhicule automobile (1), qui sont transmises lors de l'authentification à un dispositif de contrôle (20) disposé dans une station externe (3) à l'extérieur du véhicule automobile (1), dans lequel
le dispositif de contrôle (20) compare les données réelles (50) avec les données nominales (60) et, si les données réelles (50) correspondent aux données nominales (60), un signal de validation (70) est envoyé de la station externe (3) au véhicule automobile (1), permettant ainsi au conducteur (2) de démarrer le véhicule automobile (1), dans lequel
un deuxième dispositif de contrôle (20') est prévu à l'intérieur du véhicule automobile (1), qui reçoit les données nominales (60) de la station externe (3), dans lequel les données nominales (60) du dispositif de contrôle (20) de la station externe (3) sont transmises à intervalles réguliers au deuxième dispositif de contrôle (20'), dans lequel
le deuxième dispositif de contrôle (20') est fourni séparément du dispositif de reconnaissance (10).

12. Système selon la revendication 11,
**caractérisé en ce que**
le véhicule automobile (1) dispose de moyens de communication (11) pour la transmission et/ou la réception de données réelles (50) et d'un signal de validation (70), la station externe (3), qui est notamment l'Internet (14), présente un moyen de communication (23) pour la réception et/ou la transmission de données réelles (50) et d'un signal de validation (70).

13. Système selon la revendication 11 à 12,
**caractérisé en ce que**
le contrôleur (30) est intégré dans le dispositif de reconnaissance (10), le contrôleur (30) pouvant être mis en liaison de signal avec un contrôleur de moteur (31).

14. Système selon la revendication 11 à 13,
**caractérisé en ce que**
le dispositif de reconnaissance (10) est disposé à l'intérieur du véhicule automobile (1) de telle sorte qu'il n'est possible d'enregistrer des données réelles (50) que depuis le siège du conducteur du véhicule automobile (1), ou **en ce que** le dispositif de reconnaissance (10) comprend un module de communication pour établir une liaison de communication par l'intermédiaire d'un réseau de radiocommunication mobile, en particulier **en ce que** le dispositif de reconnaissance (10) est mobile, en particulier peut être retiré du véhicule automobile (1).

15. Système selon l'une des revendications précédentes,
**caractérisé en ce**
en cas de perturbation de la communication entre la station externe (3) et le véhicule automobile (1), le deuxième dispositif de contrôle (20') reçoit les données réelles (50) de la station externe (3) et compare les données réelles (50) aux données nominales (60) et, si les données réelles (50) correspondent aux données nominales (60), un signal de validation (70) est généré, permettant ainsi au conducteur (2) de démarrer le véhicule automobile (1).
